# EUROPÄISCHE PATENTANMELDUNG

(11) **EP 3 608 264 A1**
(43) Veröffentlichungstag der Anmeldung: **12.02.2020**
(21) Anmeldenummer: 18188159.0
(22) Anmeldetag: 09.08.2018
(51) Int. Cl.: B65G 65/00

(54) **TRANSPORTVORRICHTUNG ZUM TRANSPORTIEREN VON STÜCKGUTTEILEN**

(71) Anmelder: BEUMER Group GmbH & Co. KG, 59269 Beckum (DE)
(72) Erfinder: Werner, Andreas, 44267 Dortmund (DE)
(74) Vertreter: Philipp, Matthias

(57) **Zusammenfassung**

Transportvorrichtung zum Transportieren von Stückgutteilen, mit mindestens einem Tragebehälter zum Aufnehmen eines Stückgutteils und einer gesteuert antreib-und verfahrbaren, fahrerlosen Fahreinheit zum Aufnehmen und Transportieren eines Tragebehälters; wobei die Fahreinheit eine Abgabeeinrichtung zum Entladen eines auf dem aufgenommenen Tragebehälter befindlichen Stückgutteils von dem Tragebehälter und eine Halteeinrichtung zum Herstellen einer lösbaren Verbindung zwischen dem Tragebehälter und der Fahreinheit, mittels der der Tragebehälter auf der Fahreinheit zu halten ist, aufweist.

## Beschreibung

Die vorliegende Erfindung betrifft eine Transportvorrichtung zum Transportieren und/oder Sortieren von Stückgutteilen.

Konventionelle Transport- und Sortiervorrichtungen ermöglichen den Transport von Stückgutteilen auf schienengebundenen oder frei steuerbaren Fahrwagen. Aus DE 602 06 062 T2 ist eine Transportvorrichtung bekannt, bei der Tragebehälter eingesetzt werden, um Stückgutteile zu transportieren und zu sortieren.

Die Tragebehälter können dabei lösbar auf Fahrwagen aufgesetzt werden, um von diesen transportiert zu werden. Die Tragebehälter können röntgenstrahlendurchlässig sein, so dass der Inhalt der Tragebehälter, bspw. bei der Anwendung auf Flughäfen, durch Röntgengeräte erkennbar ist.

Aufgabe der vorliegenden Erfindung ist es eine möglichst flexible Handhabung von Tragebehältern und Stückgutteilen zu ermöglichen.

Erfindungsgemäß wird diese Aufgabe durch eine Transportvorrichtung mit mindestens einem Tragebehälter zum Aufnehmen eines Stückgutteils und einer gesteuert antreib-und verfahrbaren, fahrerlosen Fahreinheit zum Aufnehmen und Transportieren eines Tragebehälters gelöst, bei der die Fahreinheit eine Abgabeeinrichtung zum Entladen eines auf dem aufgenommenen Tragebehälter befindlichen Stückgutteils von dem Tragebehälter und eine Halteeinrichtung zum Herstellen einer lösbaren Verbindung zwischen dem Tragebehälter und der Fahreinheit, mittels der der Tragebehälter auf der Fahreinheit zu halten ist, aufweist. Die Abgabeeinrichtung kann auch zum Abgeben des Tragebehälters von der Fahreinheit ausgebildet sein.

Die Abgabeeinrichtung kann eine Kippeinrichtung zum Kippen eines aufgenommenen Tragebehälters zum Entladen von Stückgutteilen von dem Tragebehälter umfassen, wobei die Halteeinrichtung ausgelegt ist, den Tragebehälter während eines Kipp-Entladevorgangs auf der Fahreinheit zu halten. Die Kippeinrichtung kann eine in Fahrtrichtung weisende Kippachse aufweisen, d.h. ein aufgenommenes Stückgutteil wird seitlich, quer zur Fahrtrichtung, abgegeben. Auch ein Kipp-Abgabevorgang, bei dem ein leerer oder mit einem Stückgutteil beladener Tragebehälter abgegeben wird, ist möglich. Dabei ist die Halteeinrichtung so gesteuert, dass die Verbindung zwischen Fahreinheit und Tragebehälter gelöst ist.

Die Fahreinheit kann schienenungebunden sein, das heißt die Fahreinheit fährt nicht auf physisch ausgebildeten Führungsschienen, sondern bspw. optisch gesteuert oder durch Induktionsschleifen. Weiterhin kann die Fahreinheit vollständig ungebunden von festgelegten Routen oder Strecken sein, etwa mittels einer Steuerung, die über Kamera- und/oder Sensorsysteme verfügt.

Durch die gesteuert antreib- und verfahrbaren, fahrerlosen Fahreinheiten entsteht eine hohe Flexibilität der Transportvorrichtung. Insbesondere können neue oder geänderte Prozesse schnell umgesetzt werden. Ändern sich die Rahmenbedingungen für die Transportvorrichtung, kann dies einfach in Steuer- oder Fahrprogrammen der Fahreinheit hinterlegt werden. Entsprechend können die Orte, an denen die Fahreinheiten Stückgutteile und/oder Tragebehälter aufnehmen oder abgeben, variabel sein, ebenso wie die Fahrwege der Fahreinheiten.

Die Vorteile der vorliegenden Erfindung kommen insbesondere bei einer Transportvorrichtung mit einer Vielzahl von Fahreinheiten zur Geltung. Eine Fahreinheit kann dabei einen oder mehrere Tragebehälter aufnehmen. Jeder Tragebehälter kann ein oder mehrere Stückgutteile aufnehmen. Zum Entladen oder Abgeben des Tragebehälters kann der Tragebehälter mittels der Abgabeeinrichtung gekippt werden. Die Kippeinrichtung kann ein integriertes Scharnier oder eine gleichwirkende Funktionseinheit auf der Fahreinheit umfassen und den Tragebehälter um dieses kippen. Alternativ kann die Kippeinrichtung ein einseitiges Anhebeelement für den Tragebehälter sein. Ist die Kippvorrichtung als einseitiges Anhebeelement ausgebildet, kann die Halteeinrichtung eine Scharnierfunktion zwischen Tragebehälter und Fahreinheit erfüllen. In diesem Fall bilden Haltemittel der Fahreinheit und Haltemittel des Tragebehälters gemeinsam ein Scharnier, um das der Tragebehälter geschwenkt wird, wenn das Anhebeelement der Kippvorrichtung den Tragebehälter auf einer Seite anhebt.

Die Fahreinheit kann von einer Steuereinheit gesteuert werden, die Teil der Fahreinheit ist oder als externe, übergeordnete Steuereinheit ausgebildet ist. Eine externe Steuereinheit kann gleichzeitig eine Vielzahl von Fahreinheiten steuern. Bevorzugt ist der Antrieb der Fahreinheiten integraler Teil der Fahreinheit, d. h. jede Fahreinheit besitzt bevorzugt einen eigenen Antrieb. Der Antrieb kann ein Elektromotor, ein Verbrennungsmotor o. Ä. sein. Als Energiespeicher für den Antrieb kann eine Batterie dienen. Alternativ oder zusätzlich können elektrische Aufnehmer Kontakt zu einem Leiter entlang der Fahrstrecke herstellen, oder es kann eine induktive Energieübertragung vorgesehen sein.

Die Transportvorrichtung kann eine Fördereinrichtung mit einer Übergabestelle, an der ein Tragebehälter von einer fahrerlosen Fahreinheit an die Fördereinrichtung übergebbar ist oder umgekehrt, umfassen.

Die Fördereinrichtung kann außerdem ein Schienensystem umfassen, auf dem ein Tragebehälter förderbar ist.

Die Fördereinrichtung kann ein Förderband zum Transportieren eines Tragebehälters aufweisen.

An einer Übergabestelle kann eine Übergabeeinrichtung vorgesehen sein, die als Rutsche oder Rampe ausgebildet sein kann, von der oder auf die ein Tragebehälter auf eine Fahreinheit herab- oder auf die Fördereinrichtung hinaufgleiten oder rollen kann. Alternativ kann eine Übergabeeinrichtung vorgesehen sein, die einen Tragebehälter auf der Fördereinrichtung oder der Fahreinheit ergreift, anhebt, über die Fahreinheit oder Fördereinrichtung bewegt und auf diese aufsetzt.

Die Kombination einer Fördereinrichtung mit einer Transportvorrichtung bietet den Vorteil, unter bestimmten Umständen besonders effizient Stückgutteile transportieren zu können. Auf besonders hoch beanspruchten oder langen Streckenabschnitten kann zum Beispiel eine Fördereinrichtung vorgesehen sein, deren Streckenverlauf festgelegt, bspw. schienengebunden sein kann. Solche hochfrequent genutzten Streckenabschnitte können zum Beispiel der Wareneingang oder der Warenausgang eines Lagers, einer Sortieranlage oder einer Produktionsanlage sein. Die einfache und automatisierbare Übergabe zwischen Fahreinheiten und Fördereinrichtung erlaubt eine schnelle und effiziente Übergabe zwischen den individuellen und flexiblen Fahreinheiten und der effizienten Fördereinrichtung. Nach Übergabe einzelner Tragebehälter von der Fördereinrichtung an Fahreinheiten können anschließend flexibel eine Vielzahl von Sortierzielen angefahren werden.

In einer Ausführungsform kann der Tragebehälter einen Kopplungsabschnitt mit ersten Haltemitteln und die Halteeinrichtung zweite Haltemittel zum Zusammenwirken mit den ersten Haltemitteln aufweisen. Dadurch kann eine Relativbewegung zwischen der fahrerlosen Fahreinheit und dem Tragebehälter auf ein vorbestimmtes Maß beschränkt werden, und insbesondere kann der Tragebehälter an der Fahreinheit fixiert werden, damit er auch dann, wenn er gekippt wird, sich nicht von der Fahreinheit löst, es sei denn, dies ist gewünscht, wobei dazu die Halteeinrichtung gelöst wird.

Die ersten Haltemittel können zum formschlüssigen Zusammenwirken mit den zweiten Haltemitteln ausgebildet sein.

Die ersten Haltemittel können Erhebungen sein und die zweiten Haltemittel können mit den Erhebungen korrespondierende Aussparungen sein oder umgekehrt.

Werden die Tragebehälter von der Fördereinrichtung an die Fahreinheit übergeben, können die Tragebehälter von oben auf eine Oberseite der Fahreinheit aufgesetzt werden. Die Tragebehälter können an ihrer Unterseite die ersten Haltemittel aufweisen, die beim Aufsetzen auf die Fahreinheit mit den zweiten Haltemitteln der Fahreinheit in Eingriff kommen. Die zweiten Haltemittel sind bevorzugt auf der Oberseite der Fahreinheit angeordnet. Bevorzugt ist die Oberseite der Fahreinheit, auf der die zweiten Haltemittel angeordnet sind, eine ebene Kopplungsfläche. Weiter bevorzugt ist auch die Unterseite der Tragebehälter, auf der die ersten Haltemittel angeordnet sind, eine korrespondierende ebene Kopplungsfläche. Die ebene Oberseite der Fahreinheit und die ebene Unterseite der Tragebehälter können eine Kontaktebene bilden, die bevorzugt parallel zu einer Bodenebene ist, auf der die Fahreinheit fährt. Die ersten und zweiten Haltemittel können ein Verrutschen oder Verschieben der Tragebehälter auf den Fahreinheiten parallel zu der Kontaktebene verhindern. Je nachdem wie viel Spiel die ersten und zweiten Haltemittel zueinander aufweisen, kann eine Relativbewegung des Tragebehälters parallel zu der Kontaktebene auf ein bestimmtes Maß beschränkt werden. Bevorzugt sind positive/hervorstehende Haltemittel so ausgebildet, dass sie sich zum Ende hin verjüngen, während korrespondierende negative Haltemittel/Aussparungen sich zur Körperkanten hin aufweiten. So kann ein erleichtertes, selbsttätig zentrierendes Aufsetzen und eine automatische Zentrierung zwischen Tragebehälter und Fahreinheit hervorgerufen werden. Es können Haltemittel ohne oder nahezu ohne Spiel vorgesehen werden.

Die Halteeinrichtung kann lösbare Klemm- oder Spannelemente zum Zusammenwirken mit einem Tragebehälter aufweisen, wobei eine Fixierung des Tragebehälters an der Fahreinheit erfolgt.

Es können Klemm- oder Spannelemente vorgesehen sein, die an der Fahreinheit befestigt sind und mit entsprechenden Gegenelementen an den Tragebehältern zusammenwirken. So kann eine zusätzliche form- oder kraftschlüssige Verbindung zwischen der Fahreinheit und dem Tragebehälter hergestellt werden. Neben einer Absicherung des Tragebehälters gegen eine horizontale Verlagerung, parallel zu der Bodenebene/Kontaktebene, kann so eine Absicherung gegen eine vertikale Verlagerung, orthogonal zu der Bodenebene/Kontaktebene vorgesehen werden. Insbesondere kann so der Tragebehälter beim Kippen auf der Fahreinheit festgehalten werden.

Der Tragebehälter kann weiterhin einen Aufnahmeabschnitt aufweisen, der eine obere Gegenstandsauflagefläche für Stückgutteile definiert. Der Aufnahmeabschnitt und der Kopplungsabschnitt können zusammen einen Hohlkörper bilden.

In bestimmten Anwendungsfällen kann es nötig sein, den Inhalt von Stückgutteilen bzw. den Inhalt des Tragebehälters mittels Röntgenstrahlung zu überprüfen. Dies ist insbesondere an Flughäfen, Bahnhöfen oder ähnlichen Orten mit hohen Sicherheitsanforderungen erforderlich. Der Tragebehälter, insbesondere der Aufnahmeabschnitt und der Kopplungsabschnitt, kann bzw. können zu diesem Zweck röntgenstrahlendurchlässig sein.

Die Tragebehälter können erste, oder kleine, Tragebehälter mit einer ersten Länge (L1) und einer ersten Breite (B1), die kleiner als die erste Länge (L1) ist, umfassen, von denen jeweils mindestens zwei mittels der Halteeinrichtung auf der Fahreinheit mit ihrer Längserstreckung quer zu einer Förderrichtung nebeneinander aufnehmbar sein können.

Die Tragebehälter können zweite, oder große, Tragebehälter mit einer zweiten Länge (L2) und einer zweiten Breite (B2), die kleiner als die zweite Länge (L2) ist, umfassen. Die zweite Länge (L2) kann dabei größer als die erste Länge (L1) ist und die zweite Breite (B2) größer als die erste Breite (B1) sein. Die zweiten, oder großen, Tragebehälter können jeweils mittels der Halteeinrichtung auf der Fahreinheit mit ihrer Längserstreckung in Förderrichtung aufnehmbar sein. Die zweiten Haltemittel können dabei zum Zusammenwirken entweder mit den ersten Haltemitteln eines oder mehrerer quer zur Förderrichtung aufgenommener kleiner Tragebehälter oder mit den ersten Haltemitteln eines in Förderrichtung aufgenommenen großen Tragebehälters und zum Beschränken einer Bewegung eines Tragebehälters in oder quer zur Förderrichtung relativ zu einer Aufnahmefläche der Fahreinheit auf ein vorgegebenes Maß ausgebildet sein.

Im Sinne einer hohen Flexibilität kann es besonders vorteilhaft sein, wenn die Halteeinrichtung der Fahreinheit so ausgebildet ist, dass Tragebehälter sowohl in Längsrichtung als auch in Querrichtung zu der Fahrt- oder Transportrichtung der Fahreinheit aufgenommen werden können. Dazu können die Haltemittel auf den Tragebehältern und den Fahreinheiten sowohl in Längsrichtung als auch in Querrichtung einen gleichen modularen Abstand zueinander aufweisen. Wenn die Tragebehälter schmaler sind als sie lang sind, die Seitenlängen einer Grundfläche des Tragebehälters also unterschiedlich lang sind, können mehr Tragebehälter in Querrichtung auf einer Fahreinheit angeordnet werden als in Längsrichtung. Entsprechend kann zum Beispiel ein einziger Tragebehälter in Längsrichtung oder alternativ zwei Tragebehälter in Querrichtung auf einer Fahreinheit angeordnet werden.

Die Fahreinheit kann lenkbare Rollen oder Räder aufweisen, die um bis zu 90 ° oder mehr schwenkbar sein können, um einen kleinstmöglichen Wendekreisdurchmesser zu ermöglichen, bis hin zu einer Drehung auf der Stelle.

Die obere Gegenstandsauflagefläche kann einen nach oben konkaven Querschnitt aufweisen, um eine Mulde zum Aufnehmen des Stückgutteils/ der Stückgutteile zu bilden. Die obere Gegenstandsauflagefläche kann eine Krümmung ausschließlich quer zur Läng- oder Fahrtrichtung aufweisen, oder eine Krümmung nur in Längsrichtung, oder beides.

Bevorzugt wird eine erfindungsgemäße Transportvorrichtung durch ein im Folgenden beschriebenes Verfahren genutzt. Das Verfahren weist dabei zumindest die folgenden Schritte auf:
1) Beladen eines Tragebehälters mit einem Stückgutteil;
2) Aufnehmen des beladenen Tragebehälters mittels einer Fahreinheit und Verbinden der Fahreinheit mit dem Tragebehälter mittels der Halteeinrichtung;
3) Transportieren des beladenen Tragebehälters mittels der Fahreinheit;
4) Entladen des Stückgutteils mittels der Abgabeeinrichtung oder Lösen der Verbindung zwischen dem Tragebehälter und der Fahreinheit mittels der Halteeinrichtung und Abgeben des mit dem Stückgutteil beladenen Tragebehälters.

Das Verfahren kann weiterhin die Schritte:
1.1) Übergeben des beladenen Tragebehälters an eine Fördereinrichtung;
1.2) Transportieren des beladenen Tragebehälters auf der Fördereinrichtung;
1.3) Übergeben des beladenen Trägerbehälters von der Fördereinrichtung an eine Fahreinheit
aufweisen.

Außerdem kann das Verfahren den Schritt:
4.1)Lösen der Verbindung zwischen dem Tragebehälter und der Fahreinheit mittels der Halteeinrichtung und Übergeben des beladenen Tragebehälters von der Fahreinheit an die Fördereinrichtung
aufweisen.

Weiterhin kann der Schritt:
Übernehmen eines leeren oder mit einem Stückgutteil beladenen Tragebehälters von der Fördereinrichtung durch eine Fahreinheit, oder Übergeben in umgekehrte Richtung
umfasst sein.

Bevorzugt wird der Schritt des Entladens des Stückgutteils ausgeführt, während der Tragebehälter mit der Fahreinheit verbunden ist, wobei das Stückgutteil während der Fahrt abgekippt wird, bspw. an einer Entladestation oder einer Endstelle einer Sortieranlage.

Das Beladen des Tragebehälters kann erfolgen, indem zumindest ein Stückgutteil in einen Tragebehälter gekippt wird, von einem Förderband in den Tragebehälter fällt oder von Arbeitern oder Robotern hineingelegt wird. Die Tragebehälter können beladen werden, während sie sich auf einer Fahreinheit oder auf der Fördereinrichtung befinden. Alternativ können die Tragebehälter an einem anderen Ort, z.B. an einer separaten Beladestation beladen werden.

Zum Aufnehmen des Tragebehälters mittels der Fahreinheit kann der Tragebehälter von oben auf die Fahreinheit gesetzt werden. Dabei greifen die ersten und zweiten Haltemittel ineinander, um den Tragebehälter in horizontaler Richtung auf der Fahreinheit zu sichern oder zu befestigen. Alternativ oder zusätzlich können Spann- oder Klemmelemente genutzt werden, die den Tragebehälter in vertikaler Richtung gegenüber der Fahreinheit sichern. Die Spann- oder Klemmelemente können eine zueinander gerichtete Haltekraft zwischen Tragebehälter und Fahreinheit erzeugen.

Der Fahreinheit kann von einer externen Steuereinheit ein Ziel oder eine Wegstrecke vorgegeben werden. Alternativ können abzufahrende Routen auf einem internen

Speicher der Fahreinheit hinterlegt sein. Die Fahreinheit kann Hindernisse, kritische Stellen, Bezugspunkte, Belade-, Entladestationen oder Ähnliches beispielsweise über eine Kamera oder andere Sensoren erkennen und ggf. Ausweichmanöver, Bremsungen oder bestimmte Fahrabläufe oder Prozesse durchführen. Die Auswertung der Kamera- oder Sensordaten kann in einer zentralen Steuereinheit oder onboard in einer fahreinheitsinternen Steuerung oder einem Regelungssystem erfolgen.

Das Entladen des Tragebehälters kann erfolgen, indem Stückgutteile aus dem Tragebehälter gekippt werden oder von Arbeitern oder Maschinen herausgenommen werden. Der Tragebehälter kann entladen werden, während er sich auf einer Fahreinheit oder auf einer Fördereinrichtung befindet. Alternativ kann der Tragebehälter an einem anderen Ort, z.B. an einer separaten Entladestation entladen werden.

Der Tragebehälter kann mit einer Ladung, z.B. Stückgutteilen, beladen werden und über die Fördereinrichtung, z.B. ein Förderband, gefördert werden. Der beladene Tragebehälter kann auf eine fahrerlose Fahreinheit gefahren bzw. übergeben werden. Der Tragebehälter kann mit der fahrerlosen Fahreinheit verbunden werden, um einen sicheren Transport zu gewährleisten. Die fahrerlose Fahreinheit kann automatisch zu einem vorgegebenen Ziel fahren. Das Ziel kann z.B. eine Entladestation für die Ladung/ die Stückgutteile und/oder für den Tragebehälter sein. Während der Entladung kann die fahrerlose Fahreinheit an der Entladestation vorbeifahren und ein Stückgutteil im Vorüberfahren an der Entladestation abkippen oder unter einer Übergabestelle der Fördereinrichtung her fahren, wodurch der Tragebehälter selbsttätig oder gesteuert von der fahrerlosen Fahreinheit auf die Fördereinrichtung transportiert wird. Hierbei kann auf dem Tragebehälter eine Ladung liegen, die zusammen mit dem Tragebehälter auf die Fördereinrichtung transportiert werden kann.

Alle genannten Verfahrensschritte können beliebig oft und in beliebiger Reihenfolge ausgeführt werden. In vielen Anwendungsfällen werden die Stückgutteile entweder von wenigen zentralen Aufnahmestellen an viele unterschiedliche Abgabestellen/Entladestationen transportiert oder umgekehrt.

So können die Tragebehälter beispielsweise in einem beladenen Zustand mittels einer oder weniger Fördereinrichtungen an Übergabestellen transportiert werden und von da aus auf Fahreinheiten verteilt werden, die die Tragebehälter an Abgabestellen/Entladestationen abgeben oder die Stückgutteile an Abgabestellen/Entladestationen aus den Tragebehältern kippen. Dies kommt z.B. bei der Verteilung von Stückgutteilen in einem Lager oder einer Produktionsstätte in Frage.

Bei der Auslieferung von Stückgutteilen aus einem Lager kann der Prozess in gegenteiliger Richtung ablaufen. So kann beispielsweise die Fahreinheit mit zumindest einem unbeladenen Tragebehälter oder ohne Tragebehälter zu einer von einer Vielzahl von Aufgabestellen fahren, wo die Fahreinheit zumindest einen Tragebehälter mit zumindest einem Stückgutteil aufnehmen kann oder der zumindest eine Tragebehälter auf der Fahreinheit mit zumindest einem Stückgutteil beladen werden kann. Die Fahreinheit kann den zumindest einen Tragebehälter dann zu einer oder zu einer ausgewählten von einigen wenigen Förderbändern transportieren, um den zumindest einen Tragebehälter oder das zumindest eine Stückgutteil weiter zu fördern.

Die Erfindung wird nachfolgend anhand verschiedener Ausführungsbeispiele erläutert, wobei auf eine Zeichnung Bezug genommen wird.
Fig. 1 zeigt eine Fahreinheit mit einem Tragebehälter;
Fig. 2 zeigt eine weitere Ausführungsform der Fahreinheit;
Fig. 3a zeigt eine erfindungsgemäße Transportvorrichtung zu einem ersten Zeitpunkt;
Fig. 3b zeigt die Transportvorrichtung aus Fig. 3a zu einem zweiten Zeitpunkt;
Fig. 3c zeigt die Transportvorrichtung aus Fig. 3a zu einem dritten Zeitpunkt;
Fig. 4 zeigt eine erfindungsgemäße Transportvorrichtung bei einer Übergabe eines Tragebehälters von einer Fahreinheit an eine Fördereinrichtung;
Fig. 5 zeigt eine Fahreinheit in einem ersten Betriebszustand;
Fig. 6 zeigt die Fahreinheit aus Fig. 5 in einem zweiten Betriebszustand;
Fig. 7 zeigt die Fahreinheit aus Fig. 5 in einem dritten Betriebszustand;
Fig. 8 zeigt die Fahreinheit aus Fig. 5 in einem vierten Betriebszustand;
Fig. 9 zeigt eine Modelldarstellung einer erfindungsgemäßen Transportvorrichtung;
Fig. 10 zeigt eine Perspektivdarstellung eines Tragebehälters und
Fig. 11 zeigt eine weitere perspektivische Darstellung des Tragebehälters aus Fig. 10.

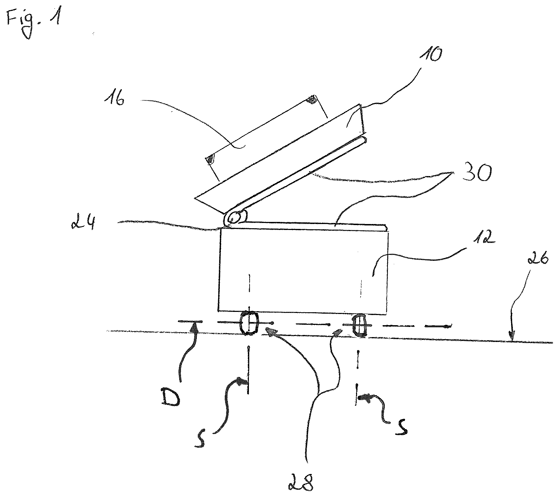

In Fig. 1 ist eine erste Ausführungsform einer Fahreinheit 12 dargestellt. Die Fahreinheit 12 verfügt über Räder oder Rollen 28, von denen zwei in der dargestellten Figur zu sehen sind. Die Fahreinheit verfügt außerdem über eine Abgabevorrichtung 30 mit einem Scharnier 24. Ein Tragebehälter 10 ist auf der Abgabevorrichtung 30 der Fahreinheit 12 lösbar fixiert. Auf einer nicht sichtbaren Auflagefläche des Tragebehälters 10 liegt ein Stückgutteil 16. In der dargestellten Ausführungsform ist die Abgabevorrichtung 30 als Kippvorrichtung ausgeführt. Im dargestellten Zustand befindet sich der Tragebehälter 10 in einem gekippten Zustand, in dem das Stückgutteil 16 von der Auflagefläche des Tragebehälters 10 rutscht. Dazu wurde der obere Schenkel der Kippvorrichtung 30 aus einer Ausgangsposition, die in etwa parallel zu einer dargestellten Bodenebene 26 ist, um das Scharnier 24 nach oben geschwenkt, so dass das Stückgutteil 16 von dem Tragebehälter 10 rutschen kann. Der Tragebehälter 10 wird dabei von einer Halteinrichtung (in Fig. 1 nicht dargestellt) auf der Fahreinheit 12 lösbar gehalten.

Die Räder 28 sind um eine Rollachse D drehbar gelagert, so dass die Fahreinheit in zumindest eine Richtung fahren kann. Während einer Geradeausfahrt der Fahreinheit 12 liegen bevorzugt jeweils zwei Räder oder Rollen 28 auf einer Rollachse D und zumindest eines der Räder oder Rollen ist antreibbar. Bevorzugt sind zumindest zwei Räder antreibbar. Gleichzeitig sind zwei Räder um eine Schwenkachse S lenkbar, um eine Kurvenfahrt der Fahreinheit zu ermöglichen.

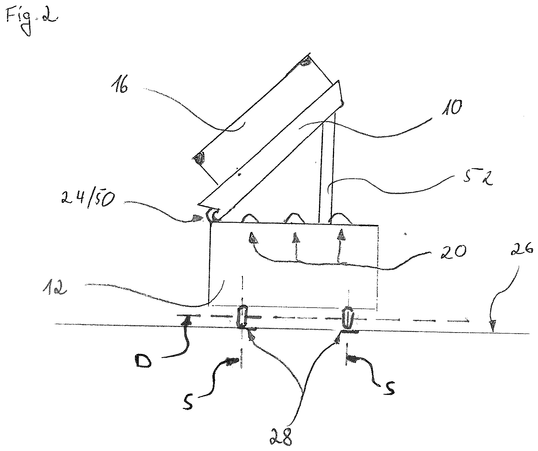

Fig. 2 zeigt eine weitere mögliche Ausführungsform einer Fahreinheit 12. In der dargestellten Ausführungsform weist die Kippvorrichtung ein einseitiges Anhebeelement 52 auf, das den Tragebehälter 10 an einer Seite nach oben drückt, so dass der Tragebehälter um ein Scharnier 24 geschwenkt wird, das mittels der Halteeinrichtung 50 auf der gegenüberliegenden Seite des Tragebehälters 10 gebildet wird. Im dargestellten Fall sind zweite Haltemittel 20 auf der Oberseite der Fahreinheit 12 erkennbar. Die zweiten Haltemittel 20 sind ebenfalls Teil der Halteeinrichtung 50 und greifen in erste Haltemittel 18 auf der Unterseite des Tragebehälters 10, die in Fig. 2 jedoch nicht dargestellt sind.

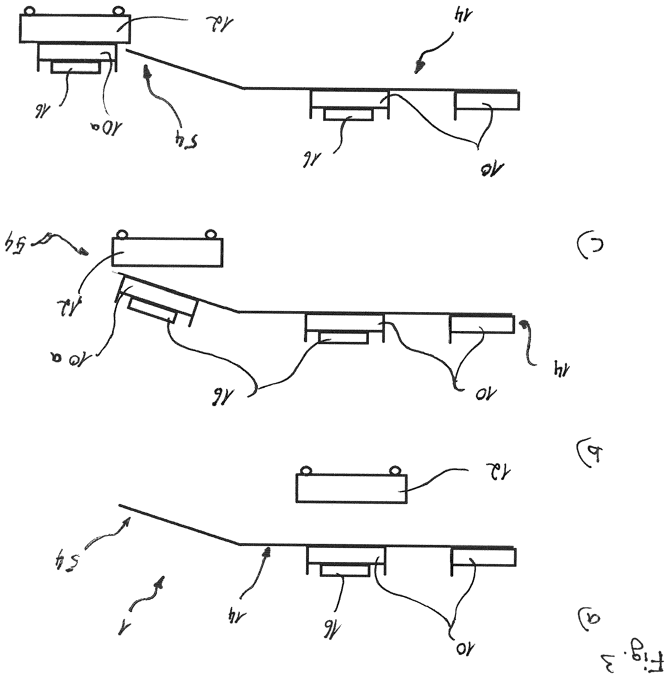

Die Figuren 3a bis 3c zeigen eine erfindungsgemäße Transportvorrichtung 1 in drei unterschiedlichen Betriebszuständen. In dem in Fig. 3a dargestellten Betriebszustand befinden sich zwei Tragebehälter 10 auf einer Fördereinrichtung 14 und werden in Richtung einer Übergabestelle 54 transportiert. Auf dem vorderen Tragebehälter befindet sich dabei ein zu transportierendes Stückgutteil 16. Gleichzeitig fährt eine Fahreinheit 12 in Richtung der Übergabestelle 54, um den Tragebehälter 10 mit dem Stückgutteil 16 aufzunehmen.

In Fig. 3b ist dargestellt, wie der Tragebehälter 10a über eine Rampe der Fördereinrichtung 14 auf die Übergabestelle 54 rutscht, um dort an die Fahreinheit 12 übergeben zu werden. Hinter dem Tragebehälter 10a befinden sich zwei weitere Tragebehälter 10 auf einem horizontalen Abschnitt der Fördereinrichtung 14, wobei zwei der Tragebehälter 10, 10a ein Stückgutteil 16 transportieren.

In Fig. 3c ist die Transportvorrichtung 1 in einem Zustand dargestellt, in dem der Tragebehälter 10a mit dem Stückgutteil 16 gerade an der Übergabestelle 54 von der Fördereinrichtung 14 an die Fahreinheit 12 übergeben wurde und von der Fahreinheit 12 weitertransportiert wird. Auf der Fördereinrichtung 14 befinden sich nach wie vor zwei Tragebehälter 10 mit einem Stückgutteil 16.

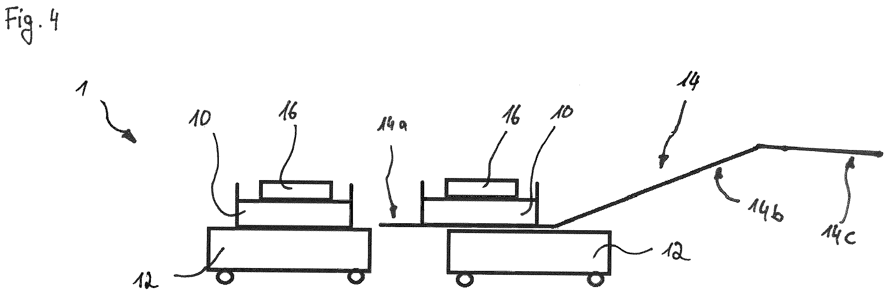

In Fig. 4 ist dargestellt, wie der Prozess in gegenläufiger Richtung ablaufen kann. Dabei wird ein Tragebehälter 10 mit einem Stückgutteil 16 von einer Fahreinheit 12 an eine Fördereinrichtung 14 übergeben.

Dabei fährt die Fahreinheit 12 unter die, in diesem Fall horizontal ausgeführte, Übergabestelle 14a der Fördereinrichtung 14. Schienen, ein Förderband oder Rollelemente der Fördereinrichtung 14 greifen dabei zumindest teilweise unter den Tragebehälter 10 mit dem Stückgutteil 16.

Spätestens mit Beginn der Steigung der Rampe 14b der Fördereinrichtung 14 wird der Tragebehälter 10 von der Fahreinheit 12 abgehoben und die Fördereinrichtung 14 übernimmt den Tragebehälter 10 und dessen Förderung.

Nachdem der Tragebehälter 10 eine ausreichende Höhe oberhalb der Fahreinheiten 12 eingenommen hat, verläuft die Fördereinrichtung 14 wieder in horizontaler Richtung, entsprechend dem horizontalen Abschnitt 14c.

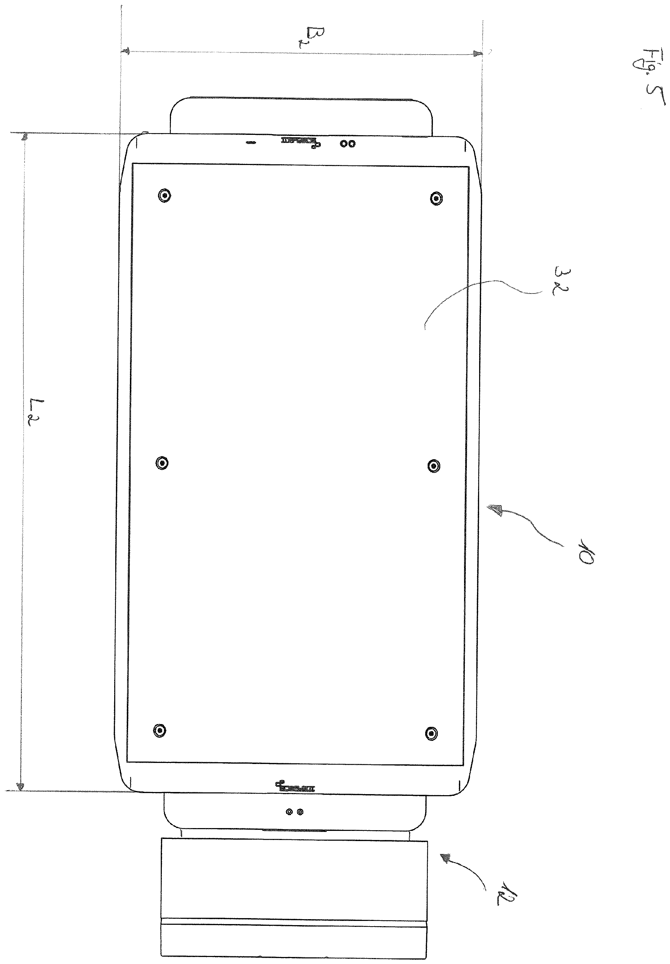

Figur 5 zeigt eine Fahreinheit 12, auf der ein Tragebehälter 10 ohne Stückgutteil angeordnet ist. Der Tragebehälter 10 ist dabei in Längsrichtung parallel zu einer Fahrtrichtung der Fahreinheit 12 angeordnet, das heißt, die Seitenkanten des Tragebehälters mit der längsten Erstreckung verlaufen parallel zu der Fahrtrichtung der Fahreinheit 12. Die dargestellte Perspektive zeigt eine Draufsicht auf die Fahreinheit 12 und den Tragebehälter 10, so dass eine Auflagefläche 32, die durch eine Mulde gebildet wird, erkennbar ist. Auf dieser Auflagefläche 32 bzw. in der entsprechenden Mulde können Stückgutteile 16 transportiert werden.

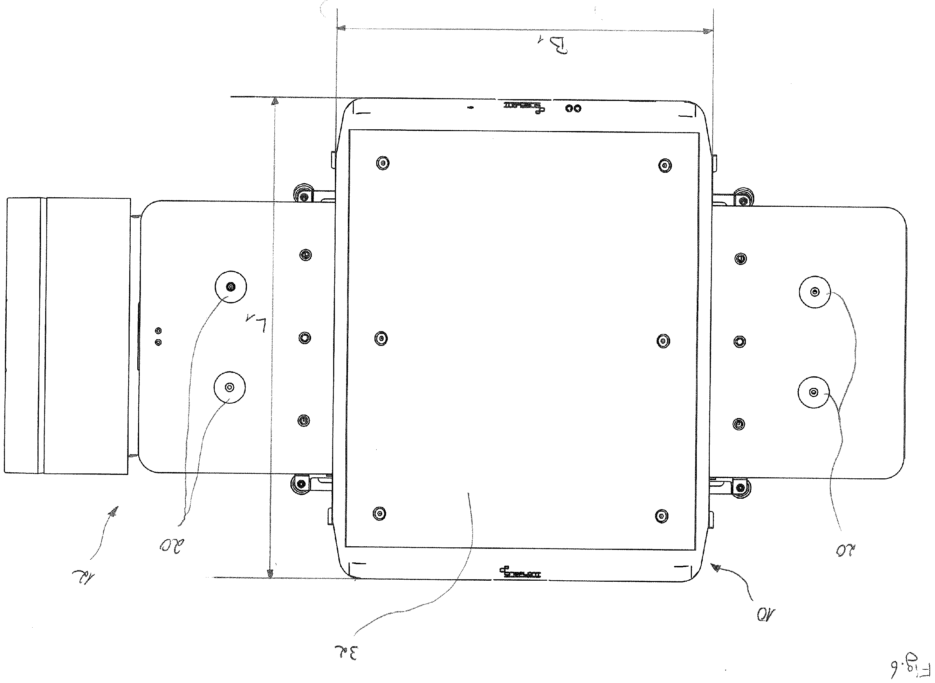

Figur 6 zeigt ebenfalls eine Draufsicht auf eine Fahreinheit 12 mit einem Tragebehälter 10, der im vorliegenden Fall jedoch nicht längs, sondern quer aufgenommen ist, oder anders gesagt ist der Tragebehälter 10 in einer um 90 ° gedrehten Anordnung auf der Fahreinheit 12 platziert. Da der Tragebehälter 10 mittig auf der Fahreinheit 12 platziert ist, sind vor und hinter dem Tragebehälter 10 jeweils noch zwei Erhebungen der zweiten Haltemittel 20 erkennbar. Vier weitere Erhebungen der Haltemittel 20 befinden sich unterhalb des Tragebehälters 10 und greifen in die ersten Haltemittel 18 des Tragebehälters 10.

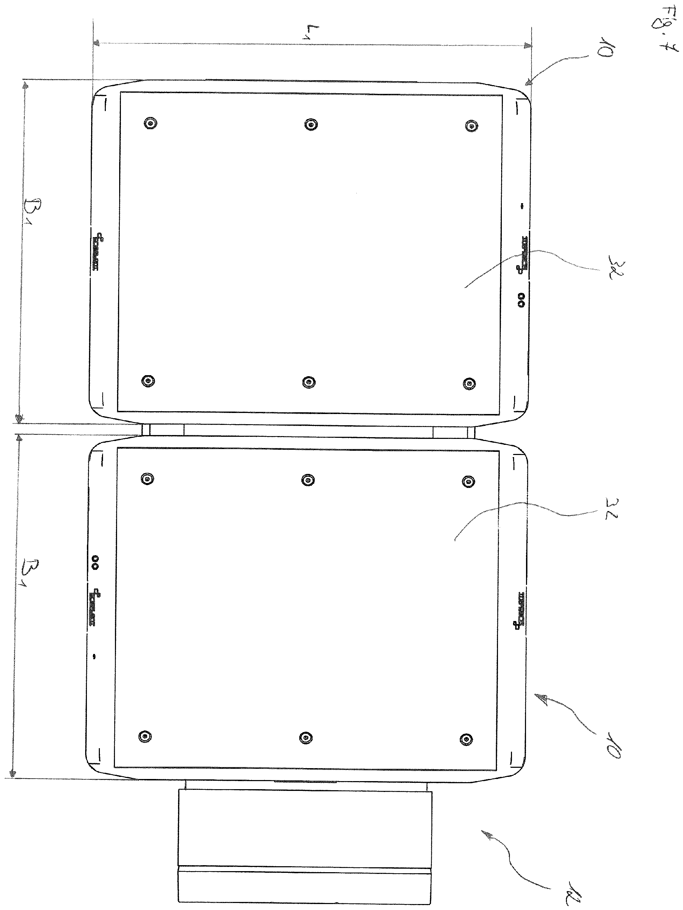

Figur 7 zeigt eine weitere Option, die Tragebehälter 10 auf der Fahreinheit 12 anzuordnen. In diesem Fall sind zwei Tragebehälter 10 quer, in einer Orientierung wie sie auch der Tragebehälter 10 aus Figur 6 aufweist, auf der Fahreinheit 12 angeordnet.

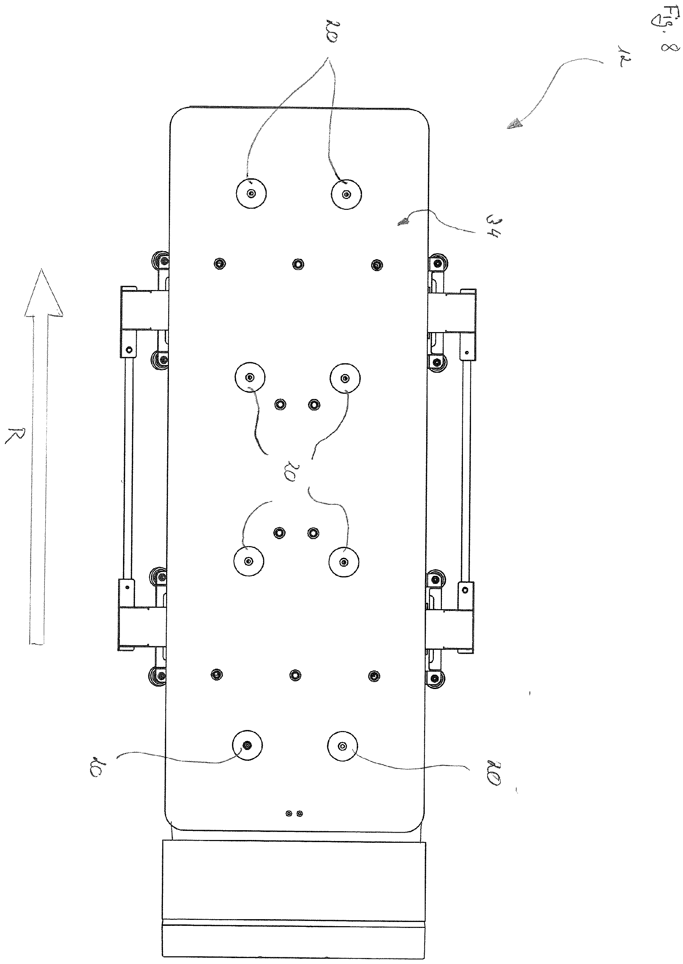

Figur 8 zeigt eine Fahreinheit 12 in einem Zustand ohne Tragebehälter 10. Entlang einer Fahrtrichtung R sind vier Paare von zweiten Haltemitteln 20 mit gleichen Abständen zueinander auf einer Kopplungsfläche 34 angeordnet. Der gleiche Abstand zwischen den Haltemittelpaaren ermöglicht es, dass zur Fixierung eines Tragebehälters 10, wie in den Figuren 6 und 7 dargestellt, ein beliebiger Satz von vier benachbarten zweiten Haltemitteln 20 genutzt werden kann. So können die Tragebehälter mittig positioniert werden, wie in Figur 6 dargestellt, oder vorne und/oder hinten auf der Fahreinheit, wie in Figur 7 dargestellt.

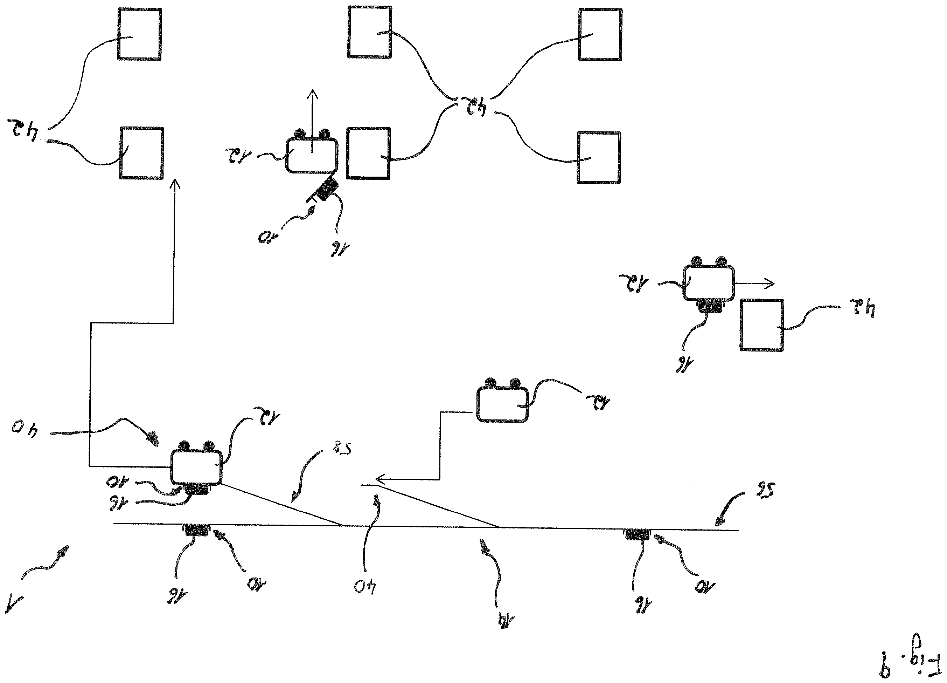

In Figur 9 ist eine schematische Darstellung der Transportvorrichtung 1 gezeigt. Auf einer Fördereinrichtung 14 werden Tragebehälter 10 transportiert, die Stückgutteile 16 aufnehmen können. Die Fördereinrichtung 14 weist im dargestellten Fall zwei Übergabestellen 40 auf, in denen die Tragebehälter 10 mit den Stückgutteilen 16 oder ohne die Stückgutteile 16 an Fahreinheiten 12 übergebbar sind. An der rechten der beiden dargestellten Übergabestellen ist ein Tragebehälter 10 mit einem Stückgutteil 16 im Moment der Übergabe an eine Fahreinheit 12 dargestellt. Die Fahreinheit 12, die den Tragebehälter 10 mit dem Stückgutteil 16 aufnimmt, hat eine durch eine Steuervorrichtung vorgegebene Fahrtroute, die durch einen Pfeil dargestellt ist. Die Fahrtroute führt zu einer der Abgabestellen 42, an der die Fahreinheit 12 das Stückgutteil aus dem Tragebehälter 10 kippen kann. Der Prozess des Abladens ist ebenfalls anhand einer Fahreinheit 12 dargestellt, die sich neben einer Abgabestelle 42 befindet. Dort wird das Stückgutteil 16 aus dem Tragebehälter 10 gekippt. Dazu wird eine bereits in Detail beschriebene Entladevorrichtung 30 zum Kippen des Tragebehälters 10 genutzt. Anschließend fährt die Fahreinheit 12 im unbeladenen Zustand, das heißt ohne ein Stückgutteil 16, entlang der durch einen Pfeil dargestellten Fahrtrichtung weiter. Die Fördereinrichtung 14 kann über einer Hauptförderstrecke 56 verfügen. Von der Hauptförderstrecke 56 können Rampen 58 abgezweigt sein, die zum Beispiel über ein Weichensystem mit der Hauptförderstrecke 56 verbunden sind. Die Rampen 58 führen zu den Übergabestellen 40. Bei der Übergabe können die Fahreinheiten 12 unter der Rampe entlangfahren, während ein Tragebehälter 10 die Rampe hinunterrutscht, bis er auf der Kopplungsfläche 34 der Fahreinheit 12 zum Aufliegen kommt und die ersten Haltemittel 18 des Tragebehälters 10 mit den zweiten Haltemitteln 20 der Fahreinheit 12 in Eingriff stehen. Dies ist insbesondere in der linken Übergabestelle 40 der Fördereinrichtung 14 dargestellt.

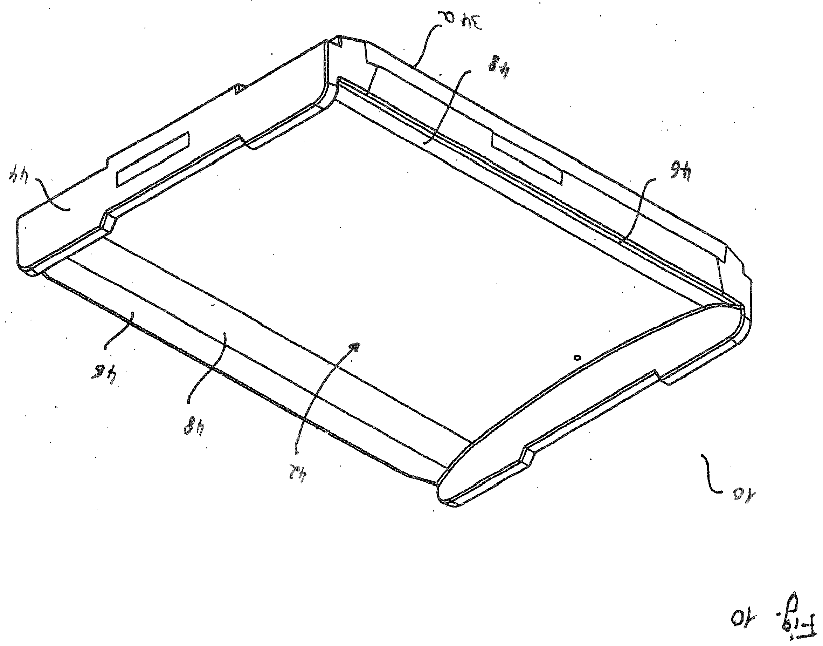

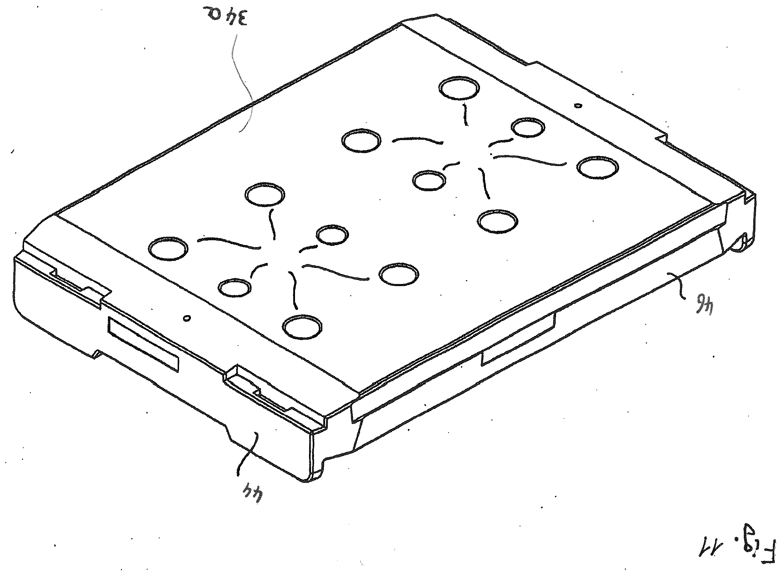

Figur 10 zeigt eine bevorzugte Ausführungsform eines Tragebehälters 10. Dabei weist der Rahmen unterschiedliche Höhen auf. Im dargestellten Fall hat der Rahmen zwei hohe Rahmenabschnitte 44 und zwei niedrige Rahmenabschnitte 46. Dies ermöglicht es, Stückgutteile einfacher über die niedrigeren Rahmenabschnitte 46 aus dem Tragebehälter 10 zu kippen. Zusätzlich kann der Tragebehälter 10 Rundungen oder Schrägen 48 aufweisen, die ebenfalls ein Herausgleiten der Stückgutteile 16 aus den Tragebehältern 10 erleichtern. Auf der Unterseite des Tragebehälters 10 ist eine Kopplungsfläche 34a ausgebildet, die auf der Kopplungsfläche 34 der Fahreinheit 12 zum Liegen kommt, wenn die ersten Haltemittel 18 mit den zweiten Haltemitteln 20 in Eingriff stehen. Eine Ausführungsform der Kopplungsfläche 34a mit ersten Haltemitteln 18 ist in Fig. 11 dargestellt. Dabei sind die ersten Haltemittel 18 als Aussparungen ausgeführt, in die als Erhebung ausgebildete zweite Haltemittel 20 eingreifen können. Der dargestellte Tragebehälter zeigt eine Auflagefläche 32, die als Mulde ausgebildet wird und durch die Rahmenteile 44 und 46 begrenzt wird. Die Mulde hat dabei eine leicht konkave Fläche und wird zu den Seiten durch die Schrägen 48 zum Rahmen hin schrittweise steiler.

## Patentansprüche

1. Transportvorrichtung zum Transportieren von Stückgutteilen (16), mit mindestens einem Tragebehälter (10) zum Aufnehmen eines Stückgutteils und einer gesteuert antreib-und verfahrbaren, fahrerlosen Fahreinheit (12) zum Aufnehmen und Transportieren eines Tragebehälters (10);
wobei die Fahreinheit (12) eine Abgabeeinrichtung (30) zum Entladen eines auf dem aufgenommenen Tragebehälter (10) befindlichen Stückgutteils (16) von dem Tragebehälter (10) und eine Halteeinrichtung (50) zum Herstellen einer lösbaren Verbindung zwischen dem Tragebehälter (10) und der Fahreinheit (12), mittels der der Tragebehälter (10) auf der Fahreinheit (12) zu halten ist, aufweist.

2. Transportvorrichtung nach Anspruch 1, **dadurch gekennzeichnet, dass** die Abgabeeinrichtung (30) zum Abgeben des Tragebehälters (10) von der Fahreinheit (12) ausgebildet ist.

3. Transportvorrichtung nach Anspruch 1 oder 2, **dadurch gekennzeichnet, dass** die Abgabeeinrichtung (30) eine Kippeinrichtung zum Kippen eines aufgenommenen Tragebehälters (10) zum Entladen von Stückgutteilen (16) von dem Tragebehälter (16) umfasst, wobei die Halteeinrichtung (50) ausgelegt ist, den Tragebehälter (10) während eines Kippvorgangs auf der Fahreinheit (12) zu halten.

4. Transportvorrichtung nach Anspruch 1, 2 oder 3, **gekennzeichnet durch** eine Fördereinrichtung (14) mit einer Übergabestelle (40), an der ein Tragebehälter (10) von der fahrerlosen Fahreinheit (12) an die Fördereinrichtung (14) übergebbar ist oder umgekehrt.

5. Transportvorrichtung nach Anspruch 4, **dadurch gekennzeichnet, dass** die Fördereinrichtung (14) ein Schienensystem umfasst, auf dem ein Tragebehälter (10) förderbar ist.

6. Transportvorrichtung nach einem der vorhergehenden Ansprüche, **dadurch gekennzeichnet, dass** der Tragebehälter (10) einen Kopplungsabschnitt mit ersten Haltemitteln (18) aufweist und die Halteeinrichtung (50) zweite Haltemittel (20) zum Zusammenwirken mit den ersten Haltemitteln (18) aufweist.

7. Transportvorrichtung nach einem der vorhergehenden Ansprüche, **dadurch gekennzeichnet, dass** die ersten Haltemittel (18) zum formschlüssigen Zusammenwirken mit den zweiten Haltemitteln (20) ausgebildet sind, wobei die ersten Haltemittel (18) Erhebungen und die zweiten Haltemittel (20) mit den Erhebungen korrespondierende Aussparungen sein können oder umgekehrt.

8. Transportvorrichtung nach einem der vorhergehenden Ansprüche, **dadurch gekennzeichnet, dass** die Halteeinrichtung (50) lösbare Klemm- oder Spannelemente zum Zusammenwirken mit einem Tragebehälter (10) aufweist, wodurch der Tragebehälter (10) an der Fahreinheit (12) fixierbar ist.

9. Transportvorrichtung nach einem der vorhergehenden Ansprüche, **dadurch gekennzeichnet, dass** der Tragebehälter (10) einen Aufnahmeabschnitt aufweist, der eine obere Gegenstandsauflagefläche (32) für Stückgutteile (16) definiert, wobei der Tragebehälter (10) röntgenstrahlendurchlässig sein kann.

10. Transportvorrichtung nach einem der vorhergehenden Ansprüche, **dadurch gekennzeichnet, dass** die Fahreinheit (12) lenkbare Rollen oder Räder (28) aufweist.

11. Transportvorrichtung nach einem der vorhergehenden Ansprüche, **dadurch gekennzeichnet, dass** die obere Gegenstandsauflagefläche (32) einen nach oben konkaven Querschnitt aufweist, um eine Mulde zum Aufnehmen des Stückgutteils/ der Stückgutteile (16) zu bilden.

12. Verfahren zum Betreiben einer Transportvorrichtung (1) nach einem der vorhergehenden Ansprüche, umfassend die folgenden Schritte:
1) Beladen eines Tragebehälters (10) mit einem Stückgutteil (16);
2) Aufnehmen des beladenen Tragebehälters (10) mittels einer Fahreinheit (11) und Verbinden der Fahreinheit (16) mit dem Tragebehälter (10) mittels der Halteeinrichtung (50);
3) Transportieren des beladenen Tragebehälters (10) mittels der Fahreinheit (12);
4) Entladen des Stückgutteils (16) mittels der Abgabeeinrichtung (30) oder Lösen der Verbindung zwischen dem Tragebehälter (10) und der Fahreinheit (12) mittels der Halteeinrichtung (50) und Abgeben des mit dem Stückgutteil (16) beladenen Tragebehälters (10).

13. Verfahren nach Anspruch 12 umfassend die Schritte:
1.1) Übergeben des beladenen Tragebehälters (10) an eine Fördereinrichtung (14);
1.2) Transportieren des beladenen Tragebehälters (10) auf der Fördereinrichtung (14);
1.3) Übergeben des beladenen Trägerbehälters (10) von der Fördereinrichtung (14) an eine Fahreinheit (12).

14. Verfahren nach Anspruch 12 oder 13 weiterhin umfassend den Schritt:
4.1)Lösen der Verbindung zwischen dem Tragebehälter (10) und der Fahreinheit (12) mittels der Halteeinrichtung (50) und Übergeben des beladenen Tragebehälters (10) von der Fahreinheit (12) an die Fördereinrichtung (14).

15. Verfahren nach Anspruch 12, 13 oder 14, weiter umfassend den Schritt:
Übernehmen eines leeren oder mit einem Stückgutteil (16) beladenen Tragebehälters (10) von der Fördereinrichtung (14) durch eine Fahreinheit (12), oder Übergeben in umgekehrter Richtung.

16. Verfahren nach einem der Ansprüche 12 bis 15, **dadurch gekennzeichnet, dass** der Schritt 4) des Entladens des Stückgutteils (16) ausgeführt wird, während der Tragebehälter (10) mit der Fahreinheit (12) verbunden ist, wobei das Stückgutteil (16) während der Fahrt abgekippt wird.
